# EUROPÄISCHE PATENTSCHRIFT

(11) **EP 2 200 854 B1**
(45) Veröffentlichungstag und Bekanntmachung des Hinweises auf die Patenterteilung: **27.03.2013**
(21) Anmeldenummer: 08802291.8
(22) Anmeldetag: 17.09.2008
(51) Int. Cl.: B60K 35/00, B60K 37/04

(54) **ANZEIGEEINRICHTUNG, INSBESONDERE FÜR EIN KRAFTFAHRZEUG**
DISPLAY DEVICE, IN PARTICULAR FOR A MOTOR VEHICLE
DISPOSITIF INDICATEUR, NOTAMMENT POUR UN VÉHICULE AUTOMOBILE

(30) Priorität: 18.09.2007 DE 102007044665
(43) Veröffentlichungstag der Anmeldung: 30.06.2010
(73) Patentinhaber: Johnson Controls Automotive Electronics GmbH, 75196 Remchingen (DE)
(72) Erfinder: SÜSS, Manfred, 75196 Remchingen (DE); MAYER, Martin, 74889 Sinsheim (DE)
(74) Vertreter: Schwöbel, Thilo K.
(86) Internationale Anmeldenummer: PCT/EP2008/007766
(87) Internationale Veröffentlichungsnummer: WO 2009/036961

(56) Entgegenhaltungen:
- EP-A- 1 319 344
- FR-A- 2 403 625
- US-A1- 2004 090 343
- US-A1- 2005 279 273

## Beschreibung

Die Erfindung betrifft eine Anzeigeeinrichtung, insbesondere ein Kombiinstrument bzw. ein Kombinationsanzeigeinstrument, für ein Kraftfahrzeug.

Kombiinstrumente mit einer Mehrzahl von Anzeigeeinheiten, wie beispielsweise Tachometer, Drehzahlmesser, Tankfüllstandsanzeige, sind in zahlreichen Ausgestaltungen am Markt vorhanden. Solche Kombiinstrumente sind in der Regel mit einer Frontscheibe versehen, die auf der in den Fahrgastraum weisenden Seite des Kombünstrumentes angebracht ist; ein entsprechendes Dokument ist EP 1 319 344 A1.

Um zu verhindern, dass hinter dem Rand der Frontscheibe verborgene Objekte, wie elektronische Bauteile, Leitungen, Kabel, Verrastungsgeometrie, Verschweißungsgeometrie oder dergleichen erkannt werden können, deren Anblick von Nutzern als störend empfunden werden körnte, ist es bekannt, beispielsweise aus der französischen Patentveröffentlichung FR 2 709 708 A1, die Frontscheibe mit einem beispielsweise aus Heißprägefolie hergestelltem, schwarzen, annähernd blickdichten Streifen zu versehen, der sich durchgängig umlaufend entlang des Frontscheibenrandes erstreckt.

Ausgehend von diesem Stand der Technik liegt der Erfindung die Aufgabe zugrunde, eine neue, kostengünstig herstellbare Anzeigeeinrichtung vorzuschlagen, die bei einfachem konstruktivem Aufbau so ausgestaltet ist, dass die angesprochenen, vor dem Blick des Nutzers zu verbergenden Objekte nicht erkannt werden können.

Diese Aufgabe wird durch eine Anzeigeeinrichtung für ein Fahrzeug, insbesondere Kombinationsanzeigeinstrument, mit einer Frontscheibe und einem Frontrahmen gelöst, wobei der Frontrahmen eine einem Betrachter zugewandte Vorderseite und eine gegenüberliegende Rückseite aufweist, wobei die Frontscheibe mit dem Frontrahmen verbunden ist, wobei der Frontrahmen auf seiner Vorderseite und im Randbereich der Frontscheibe umlaufend einen Blendenrand aufweist, wobei der Blendenrand im wesentlichen parallel zur Erstreckung der Frontscheibe vorgesehen ist und wobei die Frontscheibe auf der der Rückseite des Frontrahmens zugewandten Seite des Blendenrandes mit dem Frontrahmen verbunden ist. Hierdurch wird eine die Frontscheibe umgebende und die Frontscheibe halternde Rahmenstruktur zur Verfügung gestellt, wobei die Rahmenstruktur mit einem den Blick auf die Objekte verhindernden Abdeckrand versehen wird. Ferner ist es hierdurch vorteilhaft möglich, dass die Frontscheibe von der Rückseite des Frontrahmens aus montiert und mit dem Frontrahmen verbunden wird. Hierdurch kann der Blendenrand, der im Folgenden auch als Abdeckrand bezeichnet wird, in einfacher Weise den Randbereich der Frontscheibe abdecken, so dass auf eine kostenintensive Heißprägefolie verzichtet werden kann.

Erfindungsgemäß ist ferner vorgesehen, dass die Verbindung der Frontscheibe mit dem Frontrahmen mittels einer mechanischen Verrastung, insbesondere mittels einer Verklipsung, vorgesehen ist. Es ist hierdurch in vorteilhafter Weise möglich, dass die Montage der Frontscheibe mit dem Frontrahmen bzw. die Verbindung beider in sehr einfacher Weise und damit sehr montagefreundlich vorgesehen werden kann.

Weiterhin ist es erfindungsgemäß vorgesehen, dass die Frontscheibe in ihrem Randbereich nach außen abstehend wenigstens ein Klemmelement oder ein Verrastelement aufweist und/oder dass der Frontrahmen im Bereich des Blendenrandes wenigstens ein Klemmelement oder ein Verrastelement aufweist. Insbesondere kann das Klemmelement bzw. das Verrastelement in Form eines abstehenden Vorsprungs bzw. einer abstehenden "Nase" ausgebildet sein. Insbesondere weist die Frontscheibe eine Randkontur auf, die beispielsweise im wesentlichen oval oder rund oder auch rechteckig mit beispielsweise abgerundeten Ecken ausgebildet ist, wobei die Vorsprünge von dieser Randkontur abstehen und im montierten Zustand hinter dem Blendenrand bzw. dem Abdeckrand angeordnet sind, so dass keinerlei für einen Benutzer der Anzeigeeinrichtung wahrnehmbare ästhetische Beeinträchtigung im montierten Zustand mehr vorliegt. Alternativ oder zusätzlich zu einer Ausbildung von Klemmelementen bzw. von Verrastelementen an der Frontscheibe, insbesondere solche, die nach außen abstehen, kann es erfindungsgemäß vorgesehen sein, dass Klemmelemente bzw. Verrastelemente am Frontrahmen vorgesehen sind, die mit dem Randbereich der Frontscheibe zusammenwirken und/oder mit den Klemmelementen im Randbereich der Frontscheibe zusammenwirken und dadurch entweder eine Klemmung oder aber eine Verrastung oder aber sowohl eine Klemmung als auch eine Verrastung bewirken.

Darüberhinaus ist erfindungsgemäß auch bevorzugt, dass die Verbindung der Frontscheibe mit dem Frontrahmen mittels einer Verschweißung auf der der Rückseite des Frontrahmens zugewandten Seite des Blendenrandes vorgesehen ist. Hierdurch kann in einfacher, kostengünstiger und prozesstechnisch sicherer Weise eine lebensdauerstabile Verbindung zwischen dem Frontrahmen und der Frontscheibe hergestellt werden, die insbesondere auch weitere Anforderungen erfüllen kann wie beispielsweise Staubundurchlässigkeit bzw. Feuchtigkeitsundurchlässigkeit. Erfindungsgemäß findet insbesondere eine Laserschweißung statt, wobei der zur Laserschweißung erforderliche Laserstrahl insbesondere durch die Frontscheibe hindurch zur Schweißzone geführt wird. Auch hierfür ist es wichtig, dass die Frontscheibe zumindest im Bereich ihrer der Schweißzone abgewandten Seite keine den Lichtdurchtritt vermindernde Eigenschaft, etwa eine Tönung oder eine lichtundurchlässige Abdeckung der derglichen aufweist.

Erfindungsgemäß ist auch bevorzugt, dass die Frontscheibe über ihre gesamte Oberfläche eine im wesentlichen gleiche Lichtdurchlässigkeit aufweist. Dies bedeutet insbesondere, dass keine Heißprägefolie auf der Frontscheibe angebracht werden muss, die die Lichtdurchlässigkeit in Teilen der Frontscheibe gegenüber anderen Teilen der Frontscheibe unterschiedlich gestaltet. Erfindungsgemäß können damit vorteilhafterweise die vergleichsweise hohen Kosten für eine solche Heißprägefolie eingespart werden.

Ausführungsbeispiele der Erfindung sind in der Zeichnung dargestellt und in der nachfolgenden - rein beispielhaft aufzufassenden - Beschreibung näher erläutert.
Figur 1 zeigt in einer rein schematischen Darstellung einen an einem Kombinationsanzeigeinstrument vorgesehenen Frontrahmen, mit dem die Frontscheibe verbunden ist.
Figur 2 zeigt in einer ebenfalls schematischen Darstellung eine Schnittdarstellung parallel zur Blickrichtung durch ein Kombinationsanzeigeinstrument.

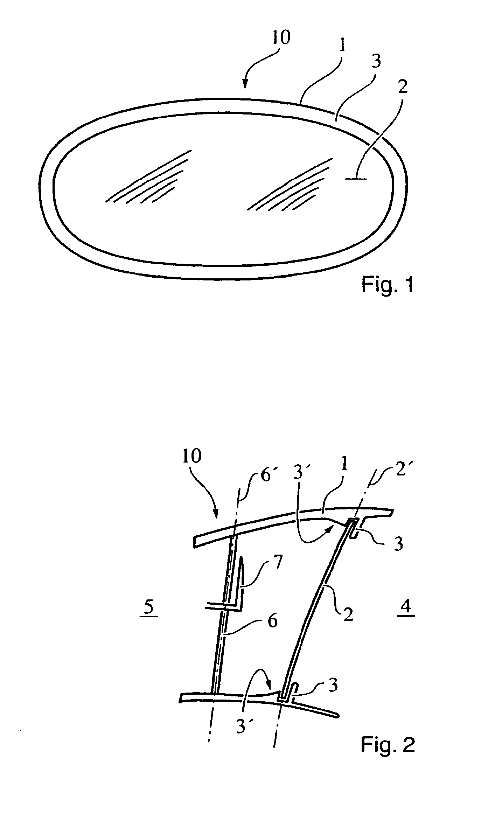

Die Figur 1 zeigt in einer rein schematischen Darstellung einen an einer Anzeigeeinrichtung 10, insbesondere ein Kombiinstrument bzw. ein Kombinationsanzeigeinstrument, vorgesehenen Frontrahmen 1, mit dem eine Frontscheibe 2 eingefasst ist.

Figur 2 zeigt in einer ebenfalls schematischen Darstellung eine Schnittdarstellung parallel zur Blickrichtung durch eine Anzeigeeinrichtung 10 bzw. ein Kombinationsanzeigeinstrument.

Beide Figuren werden nachfolgend gemeinsam beschrieben. Der Frontrahmen 1 ist mit einem nach innen auskragenden Abdeckrand 3 versehen. Der Abdeckrand bzw. der Blendenrand 3 ist zumindest über einen wesentlichen Teil seines (radialen) Verlaufs im wesentlichen parallel zur Erstreckungsrichtung der Frontscheibe 2 ausgebildet. Hierdurch wird eine besonders gute Blendenwirkung durch den Abdeckrand 3 erzielt. Die Frontscheibe 2 wird von hinten (d.h. von der im eingebauten Zustand dem Nutzer abgewandten Seite her) montiert, insbesondere wird die Frontscheibe 2 in den Frontrahmen 1 (mittels eines schematisch angedeuteten Klemmelements bzw Verrastelements 3') eingeklipst und steht im montierten Zustand am Abdeckrand 3 an. Zwischen der Rückseite des Abdeckrandes 3 und der Vorderseite der Frontscheibe 2 in ihrem Randbereich kann erfindungsgemäß alternativ oder zusätzlich eine Verschweißung vorgesehen sein, insbesondere eine Laserverschweißung.

Der Frontrahmen 1 ist erfindungsgemäß insbesondere als auszugartiger bzw. tubusartiger Frontrahmen 1 ausgebildet, so dass die Ebene 2' bzw. der Bereich der Frontscheibe 2 gegenüber einer Ebene 6' bzw. einem Bereich einer Anzeigefläche 6 (etwa eines mechanisch beweglichen Zeigers 7 oder auch einer Anzeigevorrichtung [nicht dargestellt] wie etwa ein LCD-Display oder einer anderen Art eines Displays, wie etwa ein OLED-Display) weiter in Richtung zu einem Betrachter der Anzeigeeinrichtung hin verschoben bzw. angeordnet ist.

Beispielsweise liegt die Frontscheibe 1 im montierten Zustand mit dem Rand ihrer nach vorne, dem Nutzer zugewandten Frontfläche an der nach hinten weisenden Rückfläche des Abdeckrandes 3 an.

Beispielsweise ist der Frontrahmen 1 im Spritzgussverfahren hergestellt. Weiterhin beispielsweise sind der Frontrahmen 1 und der Abdeckrand 3 im Spritzgussverfahren hergestellt, wobei insbesondere der Abdeckrand einstückig an den Frontrahmen angeformt und bereits im Spritzwerkzeug berücksichtigt sein kann.

Beispielsweise erstreckt sich der vom Innenumfang des Frontrahmens 1 abstehende Abdeckrand 3 durchgängig über den gesamten Innenumfang des Frontrahmens 1.

Der Abdeckrand 3 kann grundsätzlich beliebig und selbstverständlich auch als eine Begrenzungswand ausgestaltet sein, die nach vorne eine am Frontrahmen vorgesehene Aufnahmenut begrenzt, in die die Frontscheibe mit ihrem Rand eingreift. Dabei erstreckt sich die Aufnahmenut beispielsweise durchgängig entlang des gesamten Innenumfangs des Frontrahmens.

### Bezugszeichenliste

- 1: Frontrahmen
- 2: Frontscheibe
- 2': Ebene der Frontscheibe
- 3: Abdeckrand / Blendenrand
- 3': Klemmelement / Verrastelement
- 4: Vorderseite
- 5: Rückseite
- 6: Anzeigefläche
- 6': Ebene der Anzeigefläche
- 7: Zeiger
- 10: Anzeigeeinrichtung

## Patentansprüche

1. Anzeigeeinrichtung (10) für ein Fahrzeug, insbesondere Kombinationsanzeigeinstrument, mit einer Frontscheibe (2) und einem Frontrahmen (1), wobei der Frontrahmen (1) eine einem Betrachter zugewandte Vorderseite (4) und eine gegenüberliegende Rückseite (5) aufweist, wobei die Frontscheibe (2) mit dem Frontrahmen (1) verbunden ist, wobei der Frontrahmen (1) auf seiner Vorderseite (4) und im Randbereich der Frontscheibe (2) umlaufend einen Blendenrand (3) aufweist, wobei der Blendenrand (3) im wesentlichen parallel zur Erstreckung der Frontscheibe (2) vorgesehen ist und wobei die Frontscheibe (2) auf der der Rückseite (5) des Frontrahmens (1) zugewandten Seite des Blendenrandes (3) mit dem Frontrahmen (1) verbunden ist, **dadurch gekennzeichnet, dass** die Verbindung der Frontscheibe (2) mit dem Frontrahmen (1) mittels einer mechanischen Verrastung vorgesehen ist, wobei die Frontscheibe (2) in ihrem Randbereich nach außen abstehende Klemmelemente und Verrastelemente aufweist, wobei der Frontrahmen (1) im Bereich des Blendenrandes (3) Klemmelemente und Verrastelemente (3') aufweist, die mit den Klemmelementen und den Verrastelementen der Frontscheibe (2) zusammenwirken und dadurch eine Klemmung und eine Verrastung bewirken.

2. Anzeigeeinrichtung (10) nach Anspruch 1, **dadurch gekennzeichnet, dass** die Verbindung der Frontscheibe (2) mit dem Frontrahmen (1) mittels einer zusätzlichen Verschweißung auf der der Rückseite (5) des Frontrahmens (1) zugewandten Seite des Blendenrandes (3) vorgesehen ist.

3. Anzeigeeinrichtung nach einem der vorhergehenden Ansprüche, **dadurch gekennzeichnet, dass** die Frontscheibe (2) über ihre gesamte Oberfläche eine im Wesentlichen gleiche Lichtdurchlässigkeit aufweist.

## Claims

1. A display device (10) for a vehicle, in particular a combination display instrument, having a front panel (2) and a front frame (1), the front frame (1) having a front side (4) facing a viewer, and an opposite rear side (5), the front panel (2) being connected to the front frame (1), wherein on its front side (4) and in an encircling fashion in the edge region of the front panel (2) the front frame (1) has an aperture edge (3), the aperture edge (3) being provided substantially parallel to the extent of the front panel (2), and the front panel (2) being connected to the front frame (1) on that side of the aperture edge (3) facing the rear side (5) of the front frame (1), **characterized in that** the connection of the front panel (2) to the front frame (1) is provided by means of a mechanical latch, wherein in its edge region the front panel (2) has at least one outwardly projecting clamping element or latching element (3'), wherein the front frame (1) has in the region of the aperture edge (3) at least one clamping element or latching element (3') acting together with the clamping elements and the latching elements of the front panel (2) and thus effectuating a clamping and a latching.

2. The display device (10) as claimed claim 1, **characterized in that** the connection of the front panel (2) to the front frame (1) is provided by means of a welded joint on that side of the aperture edge (3) facing the rear side (5) of the front frame (1).

3. The display device as claimed in one of the preceding claims, **characterized in that** over its entire surface the front panel (2) has a substantially equal optical transparency.

## Revendications

1. Dispositif d'affichage (10) pour un véhicule, en particulier un instrument d'affichage combinaison, ayant un écran avant (2) et un cadre avant (1), le cadre avant (1) ayant une face avant (4), dirigée vers un observateur, et une face arrière (5) opposée à la face avant (4), l'écran avant (2) étant attaché au cadre avant (1), le cadre avant (1) comprenant sur sa face avant (4) et dans la région du bord de l'écran avant (2) une bordure d'ouverture (3) de manière circonférentielle, la bordure d'ouverture (3) étant prévue essentiellement parallèle à l'extension de l'écran avant (2), et l'écran avant (2) étant connecté au cadre avant (1) du côté de la bordure d'ouverture (3) dirigée vers la face arrière (5) du cadre avant (1), **caractérisé en ce que** la connexion de l'écran avant (2) avec le cadre avant (1) est prévue par le biais d'une verrouillage mécanique, l'écran avant (2) comprenant, dans sa région de bord et saillant vers l'extérieur, des éléments de serrage et des éléments d'encliquetage, le cadre avant (1) comprenant, dans la région de la bordure d'ouverture (3), des éléments de serrage et des éléments d'encliquetage (3 '), qui coopèrent avec les éléments de serrage et les éléments d'encliquetage de l'écran avant (2) et qui causent ainsi un serrage et un encliquetage.

2. Dispositif d'affichage (10) selon la revendication 1, **caractérisé en ce que** la connexion de l'écran avant (2) avec le cadre avant (1) est prévue par le biais d'une soudure sur le côté dirigée vers la face arrière (5) du cadre avant (1) de la bordure d'ouverture (3).

3. Dispositif d'affichage (10) selon l'une quelconque des revendications précédentes, **caractérisé en ce que** l'écran avant (2) a une transmission de lumière essentiellement identique sur toute sa surface.
